# EUROPEAN PATENT SPECIFICATION

(11) **EP 0 256 282 B1**
(45) Date of publication and mention of the grant of the patent: **16.06.1993**
(21) Application number: 87109729.1
(22) Date of filing: 06.07.1987
(51) Int. Cl.: A61B 8/12, A61B 8/00, G10K 11/34, G01S 15/89

(54) **Ultrasonic wave diagnostic apparatus employing interpolated values of weighting data**
Ultraschallwellendiagnosegerät unter Anwendung von Interpolationswerten des Gewichtungsfaktors
Appareil diagnostic ultrasonore employant les valeurs interpolées pour la valeur de poids

(30) Priority: 07.07.1986 JP 159049/86
(43) Date of publication of application: 24.02.1988
(73) Proprietor: MATSUSHITA ELECTRIC INDUSTRIAL CO., LTD., Kadoma-shi, Osaka-fu, 571 (JP)
(72) Inventor: Nakamura, Yasuhiro, Hachioji-shi Tokyo (JP); Sakai, Ikuo, Tama-ku Kawasaki (JP); Kawabuchi, Masami, Yokohama (JP)
(74) Representative: Tiedtke, Harro, Dipl.-Ing.

(56) References cited:
- DE-A- 2 727 551
- US-A- 4 016 862
- US-A- 4 031 743
- US-A- 4 127 034
- JP-A-56-72527 in Patent Abstract of Japan, vol.5, no.137 (E-72)(809) 29 August 1981
- Martin, Swarbrick, Cammarata,"Physikalische Pharmazie" 2nd edition, Wissenschaftliche Verlagsgesellschaft, Stuttgart, 1980, pages 567-579, Chapter "Analogrechner in der Pharmazie"

## Description

The present invention relates to an ultrasonic wave diagnostic apparatus for medical diagnostic applications wherein a beam of ultrasonic waves is generated by a an array of transducer elements, with beam control being performed using a plurality of values of weighting data.

When such an ultrasonic wave diagnostic apparatus transmits an ultrasonic wave beam to the interior of a under examination, the ultrasonic wave echoes which are reflected from the body will differ in amplitude in accordance with acoustic impedance presented to the ultrasonic waves as they pass through the body. Data concerning the body under examination can be derived by scanning the ultrasonic wave beam, and this data can then be used to produce a display image representing a cross-section of the body. Furthermore, by detecting frequency deviations of the ultrasonic wave echoes it is possible to obtain data concerning blood flow. Such a diagnostic apparatus is widely used in the field of medicine. Generally, scanning of the ultrasonic wave beam is executed by using an in-line array of piezoelectric electro-acoustic transducer elements, referred to for brevity hereinafter as piezoelectric elements. Respectively different delay times are applied to pulse-form drive signals which are supplied to the respective piezoelectric elements, in order to control the direction of transmission of the ultrasonic wave beam. In addition, by applying respectively different delay times to the echo signals which are received by the piezoelectric elements and by adding the resultant signals, the directivity of the received signals is controlled. In this way, the direction of the ultrasonic wave beam and the transmit/receive position is altered each time a transmitting/receiving operation is executed. The directivity of an ultrasonic wave beam produced in this way is such that in addition to a main lobe at the beam center, side lobes are produced which exhibit a lower level of gain than the main lobe. Due to mingling of data from these side lobes with the data from the main lobe, deterioration of image quality occurs. As a countermeasure against this, it is possible to lower the channel gain in accordance with the distance of a channel (i.e. of a piezoelectric element) from the center of the piezoelectric element array, at least during the transmitting or receiving operations, by deriving respective values of weighting data for the channels and controlling the channel gain in accordance with this data. This enables a considerable reduction of the side lobe level. Such a selective modification of the channel gain can be performed either by controlling a drive circuit which generates drive signals which are applied to the electro-acoustic transducer elements, so as to selectively reduce the drive signal level, or by controlling the amplification applied to the received ultrasonic wave echoes (e.g. by employing variable gain amplifier circuits therefor), or by applying such control during both transmitting and receiving. However, in the prior art, it has been necessary to apply such control to every channel of the drive circuit or the receiving amplifier circuit, and moreover to provide separate data conversion means (e.g. D/A converters etc.) to produce respective control data for each of the channels, so that a substantial number of additional components is required.

From US-PS 4,060,792 a cylindrical array of radiating elements or sonar transducers is known, each of which is coupled by a clipping circuit to a multiply tapped shift register for imparting delays to the signals of the elements for forming a beam of radiant energy. Sidelobes on the radiation pattern are reduced by multiplying the signals of the shift registers by weighting factors prior to their summation for forming a beam, with clipped signals serving as unitary factors of positive or negative sign in the multiplication. That is, an adjustment of the apparent form of the ultrasonic beam is allowed by appropriate weighting factors using multipliers.

Furthermore, an ultrasonic wave diagnostic apparatus is known comprising an array of electro-acoustic transducer elements for transmitting ultrasonic waves to a body under examination and for converting ultrasonic echoes received from said body into electrical echo signals and transmitting/receiving circuits each being connected to one of the transducer elements for driving said element by drive signals and for amplifying echo signals received therefrom, wherein said amplified echo signals are displayed as an echo image and wherein for side lobe suppression the gains of said transmitting/receiving circuits are controlled by control voltages converted from digital weighting data by means of D/A-converters.

Due to the fact that the echo image imroves when the number of transducers and channels increases the efforts for obtaining a good echo image by processing the digital data received from the plurality of transducers are unsufficiently high in known ultrasonic wave diagnostic apparatuses.

Therefore, it is an object of the invention to further develop an ultrasonic wave diagnostic apparatus such that the number of components for converting the obtained echo data from the plurality of transducers is reduced.

According to the invention, this is achieved by supplying selected transmitting/receiving circuits which are connected to transducer elements spaced apart by a predetermined number of transducer elements on said array with the appropriate gain control voltages by means of associated D/A-converters, whereas the remaining transmitting/receiving circuits which are connected to the other transducer elements are supplied with gain control voltages having interpolated values, said gain control voltages being generated by analogous processing of the output voltages from at least two adjacent D/A-converters, wherein said analogous processing implies multiplying the output voltage from each of said D/A-converters with suitable coefficients by means of multiplying elements, and summing up the resultant output voltages from at least two of said multiplying elements by means of summing elements, whereby said interpolated values for said gain control voltages can be determined independently from each other and interpolated nonlinearly.

Thus, especially by means of selecting only a number of transmitting/receiving circuits which are connected to transducer elements spaced apart by a predetermined number of transducer elements and by supplying appropriate gain control voltages to said selected transmitting/receiving circuits, it is possible to substantially decrease the number of components of the ultrasonic wave diagnostic apparatus. Furthermore, by multiplying the output voltage of each of said D/A-converters with suitable coefficients by means of multiplying elements, and by summing up the resultant output voltages, it is possible to achieve interpolated values for said gain control voltages which thus can be determined independently from each other and interpolated nonlinearly.
Fig. 1 is a block diagram of a prior art ultrasonic wave diagnostic apparatus;
Fig. 2 is a circuit diagram of a drive circuit and a weighting circuit of a prior art ultrasonic wave diagnostic apparatus;
Fig. 3 is a circuit diagram of a drive circuit and a weighting circuit of an ultrasonic wave diagnostic apparatus according to an embodiment;
Fig. 4(a) and 4(b) are graphs illustrating relations between weighting values applied to transmitting/receiving signals and respective channel positions and;
Fig. 5 is a circuit diagram of a drive circuit and a weighting circuit of an ultrasonic wave diagnostic apparatus according to an embodiment of the present invention.

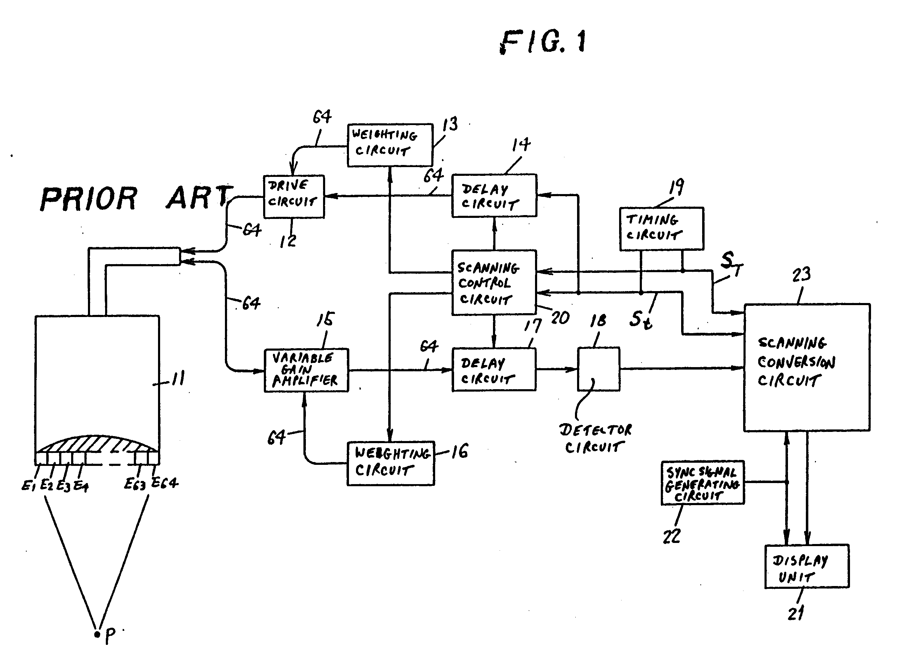

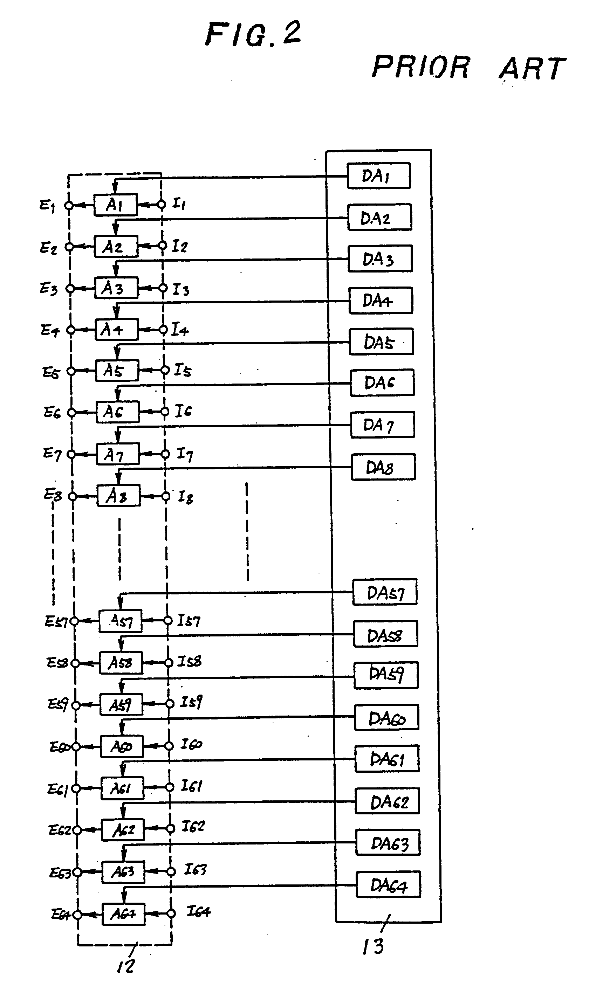

A method of substantially reducing side lobe levels by reducing channel gain in accordance with the distance of piezoelectric elements (i.e. channels) from the center of the piezoelectric element array, in order to attain improved image quality, is known. In order to make it easier to understand the present invention, such a prior art ultrasonic wave diagnostic apparatus will first be described, referring to Figs. 1 and 2. Fig. 1 shows a fan configuration scanning type of an ultrasonic wave diagnostic apparatus which employs 64 piezoelectric elements. Numeral 11 denotes a probe which consists of a cable and 64 respectively independent piezoelectric elements designated as E₁ to E₆₄, each of which is driven by pulse signals applied by a 64 channel drive circuit 12. The channels of drive circuit 12 (i.e. the individual drive circuits of circuit 12 which drive respective piezoelectric elements) are each responsive to a control input (supplied from a weighting circuit as described hereinafter) for determining the amplitude of a drive output produced therefrom. Numeral 13 denotes a weighting circuit for controlling the amplitudes of the respective pulse signals which are generated by the 64 channels of drive circuit 12, and numeral 14 denotes a delay circuit for generating timing signals which serve to control driving of the piezoelectric elements E₁ to E₆₄ in accordance with the direction and the focal distance of the ultrasonic wave pulse beam which is generated by probe 11. Numeral 15 denotes a variable gain amplifier circuit having 64 channels for respectively amplifying the echo signals which are received by the piezoelectric elements E₁ to E₆₄, with the gains of the 64 channels of the variable gain amplifier circuit 15 being respectively controlled by 64 control outputs produced by a weighting circuit 16. Numeral 17 denotes a delay circuit for applying respectively different delay times to the echo signals which are produced from respective channels of the variable gain amplifier circuit 15, and for adding up the resultant delayed signals. Numeral 18 denotes a detector circuit for detecting the echo signals derived from the delay circuit 17. Detector circuit 18 can be of the A.M. detector type, for example. Numeral 19 denotes a timing circuit for producing signals which determine the timings at which scanning by the ultrasonic wave beam is started, and the timings at which the ultrasonic wave pulses are generated, and numeral 20 denotes a scanning control circuit counting the timing signals which are produced by the timing circuit 19 for supplying data to the weighting circuits 13 and 16 and to the delay circuits 14 and 17 in each scanning line. Numeral 21 denotes a display unit such as a CRT monitor for displaying a cross-sectional image which is controlled by sync signals produced by a sync signal generating circuit 22. Numeral 23 denotes a scanning conversion circuit for converting the speed at which the echo signals are received into a suitable scanning speed for displaying the cross-sectional image by the display means 21.

Fig. 2 shows details of the configuration of drive circuit 12 and weighting circuit 13 of Fig. 1. In Fig. 2, A₁ to A₆₄ denote respective channels, I₁ to I₆₄ denote respective drive signal inputs, E₁ to E₆₄ denote drive signal outputs, and DA₁ to DA₆₄ denote D/A converters.

The operation of this prior art example is as follows. Timing circuit 19 produces timing signals Sₜ at fixed periodic intervals, and generates timing signals S_{T} once in every specific number of repetitions of the timing signals Sₜ. The timing signals Sₜ and S_{T} are respectively applied to a clear terminal and to a clock terminal of a counter which is an internal part of the scanning control circuit 20, whereby scanning line data is produced and appropriate delay data and weighting data for deflection of the ultrasonic wave beam along each of successive scanning lines are obtained from memory means such as a ROM. These data are respectively sent to the delay circuits 14, 17 and to the weighting circuits 13, 16. The delay circuit 14 serves to delay the timing signals Sₜ by a period of time which is so long that the ultrasonic wave pulses transmitted from the piezoelectric elements E₁ to E₆₄ reach the target point P simultaneously. The 64 delayed trigger signals are applied to inputs of respective ones of the 64 channels of drive circuit 12, and the amplitudes of the respective drive signals which are produced from drive circuit 12 are controlled by the control outputs of the 64 channels of the weighting circuit 13. The 64 drive signals, which are thereby produced as outputs, are applied to drive respective ones of the piezoelectric elements E₁ to E₆₄ of probe 11, whereby ultrasonic wave pulses are transmitted towards the point P of the body which is under examination. The precise timings of the initiation of the pulse generation from respective piezoelectric elements are determined by the delayed trigger signals which are supplied from the delay circuit 14 as described above. Reflected echo signals are then received by the piezoelectric elements E₁ to E₆₄. These 64 echo signals are amplified in respective ones of the 64 channels of the variable gain amplifier circuit 15 by respectively different degrees of gain which are determined by the control outputs produced from the 64 channels of weighting circuit 16; these outputs are applied to the variable gain amplifier circuit 15. Appropriate amounts of delay are applied to the 64 echo signal outputs from the variable gain amplifier circuit 15 by the delay circuit 17 such that the echo signals from point P will apparently arrive simultaneously, and all of the resultant delayed signals are then added up. The receiving operation described above is executed during a time interval extending from the completion of a transmit operation (based on drive signals from drive circuit 12 and initiated by a pulse of the timing signal Sₜ) until the succeeding pulse of the timing signal Sₜ is generated. These alternating transmitting/receiving operations are executed repetitively, with the beam deflection direction being changed at each repetition, whereby a 2-dimensional cross-sectional image is derived.

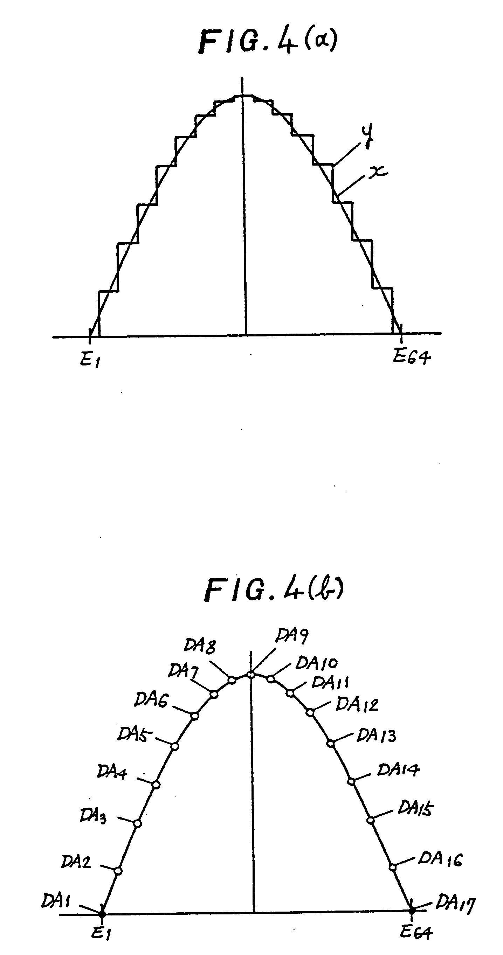

In general, the speed of scanning of the cross-sectional image will be different from the scanning speed of the display means (e.g. a CRT raster scan display). For this reason, the cross-sectional image data is transferred through the scanning conversion circuit 23 to the display unit 21. The respective amplitudes of the drive signals, which drive the piezoelectric elements E₁ to E₆₄, and the respective gains which are utilized during amplification of the received echo signals from the piezoelectric elements E₁ to E₆₄ are shown graphically as a curve x in Fig. 4(a), in which the physical positions of the piezoelectric elements E₁ to E₆₄ in the probe 11 are indicated along the horizontal axis, and the drive signal amplitude (or receiving gain) is plotted along the vertical axis.

The respective channels of the drive circuit 12 and of the variable gain amplifier circuit 15 are mutually controlled independently by control voltages supplied from external control means. These control voltages, which are applied by the weighting circuits 13 and 16 to the drive circuit 12 and to the variable gain amplifier circuit 15 respectively, are of the form indicated by the curve x in Fig. 4(a), and are determined by 64 D/A converters.

If, on the other hand, an identical control voltage is applied to each channel of a set of four successively adjacent channels, only 16 sets of weighting data (i.e. respectively produced from 16 D/A converters) will be required. In this way the number of components and the time required for setting data can be reduced. However, if this is done, the weighting data will be of the form shown by the curve y in Fig. 4(a).

However, with a prior art type of ultrasonic wave diagnostic apparatus as described above and shown in Fig. 2, it is necessary to supply weighting data to all channels of the drive circuit 12 and of the variable gain amplifier circuit 15, so that the number of sets of components (e.g. D/A converters, etc) required to control the respective channels must be the same as the number of channels. In addition, it is necessary to provide a number of sets of weighting data which is identical to the number of channels. Thus, when these data are updated each time the direction of ultrasonic wave beam scanning is changed, it is necessary to execute the setting of data for all of the channels. Furthermore, the development of such ultrasonic wave diagnostic apparatuses tends towards increasing the channels utilized for transmitting and receiving, whereby a corresponding increase in the number of components is required.

As a countermeasure against such an increase in the number of components, it is possible to utilize the same weighting data to control the drive circuit 12 and variable gain amplifier circuit 15 channels of sets of two or more respectively adjacent piezoelectric elements, as described above. However, if this is done discontinuities will arise in the weighting which is applied between certain adjacent channels, and it will not be possible to attain a sufficiently low side lobe level. This is especially true if the same weighting data are used for a large number of channels, in which case the discontinuities will become excessively large, and thus, the effects of side lobe suppression by means of such weighting will be substantially reduced.

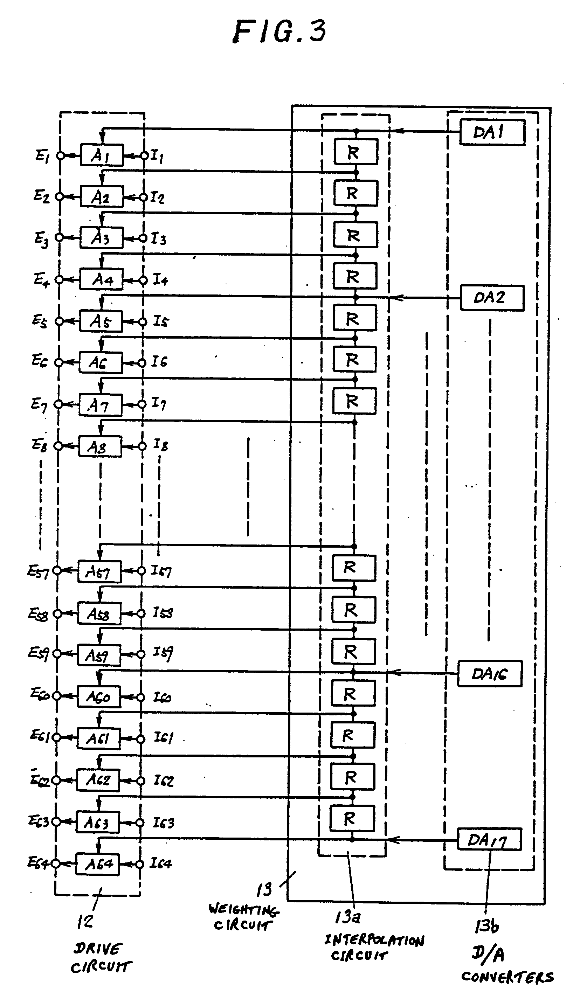

An embodiment of an ultrasonic wave diagnostic apparatus will be described with reference to Fig. 3, which is a circuit diagram of a drive circuit and weighting circuit of this embodiment. As already described above, the transmitting/receiving system for an ultrasonic wave diagnostic apparatus is configured by employing 64 electro-acoustic transducer elements. The remaining components of this embodiment can be identical to those shown in Fig. 1 and described above, and a further description thereof will be omitted.

In Fig. 3, reference numeral 12 denotes a drive circuit having channels A₁ to A₆₄, with input drive signals being applied to inputs I₁ to I₆₄ and outputs being produced from E₁ to E₆₄. Numeral 13 denotes a weighting circuit for producing voltages to control the amplitudes of the drive signals which are produced from respective ones of channels A₁ to A₆₄ of the drive circuit 12. The weighting circuit 13 comprises a group of D/A converters DA₁ to DA17, collectively designated as 13b; these converters produce output voltages in accordance with digital data set by an external control circuit, e.g. the scanning control circuit 20 shown in Fig. 1. The output voltages produced by the D/A converter group 13b are applied to an interpolation circuit 13a. In this embodiment, the outputs from each pair of mutually adjacent ones of the D/A converters DA₁ to DA17 are divided by a set of four resistors, each designated as R, of the interpolation circuit 13a.

The operation of this embodiment will be described with reference to Figs. 4(a) and 4(b). In Figs. 4(b) and (a), the physical positions of the piezoelectric elements of probe 1 are indicated along the horizontal axis as E₁ to E₆₄, while the drive voltage amplitude is plotted along the vertical axis. In Fig. 4(a) the curve x indicates an ideal weighting characteristic while Fig. 4(b) shows the weighting characteristic which is obtained by means of the interpolation circuit 13a. The data which are respectively set for D/A converters DA₁ to DA₁₇ shown in Fig. 3 are determined so as to produce output voltages which are respectively indicated as DA₁ to DA₁₇ in Fig. 4(b), with the outputs from mutually adjacent D/A converters of DA₁ to DA₁₇ being divided between four resistors R. The outputs from the D/A converters DA₁ to DA₁₇ are directly applied to respective ones of the channels A₁, A₅, A₉, A₁₃, A₁₇,....., A₆₄ , i.e. to respective channels disposed at 4-channel intervals. The remaining channels are supplied with voltages which are derived from the resistance divider connection points. In this way the drive signals which are applied to the inputs I₁ to I₆₄ will result in respective outputs E₁ to E₆₄ whose amplitudes are controlled in accordance with weighting data being substantially close to the ideal weighting curve x shown in Fig 4(a). This is caused by means of the linear interpolation which is executed by the sets of resistors R. It can thus be understood that by means of this embodiment, a form of analog computation operation utilizing a resistive voltage divider is exerted upon the output voltages by each pair of mutually adjacent D/A converter outputs, (these D/A converter outputs being spaced apart by a fixed number of channels, i.e. four channels in this embodiment), in order to thereby produce three interpolated weighting control voltages from each such pair of D/A converter outputs. In this way, the number of components (in particular, D/A converters) which are required for producing weighting data to drive the piezoelectric elements with respectively appropriate drive levels can be reduced.

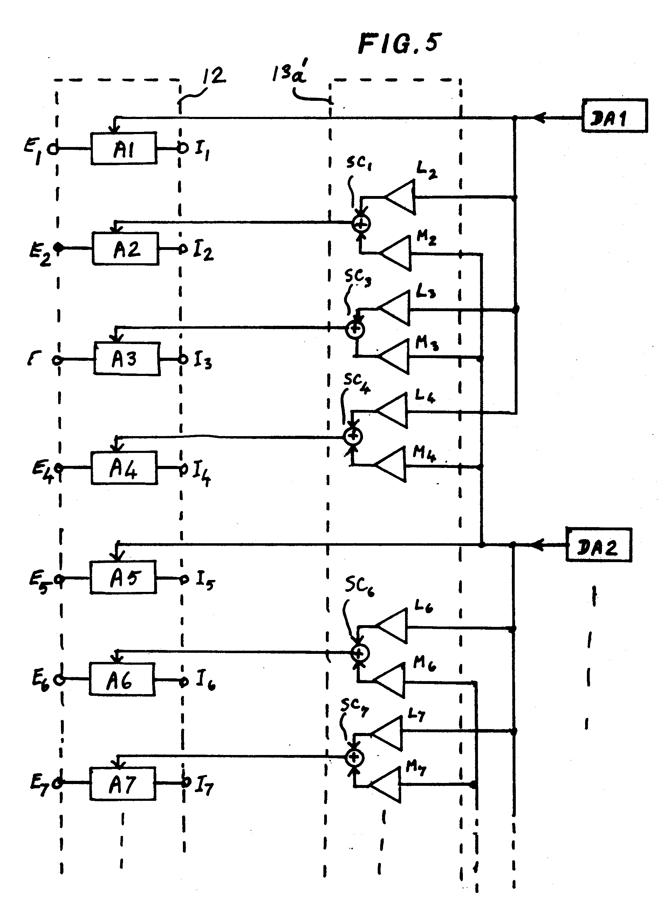

By means of the embodiment described above, a substantially precise correspondence between the weighting curve, which is obtained by using interpolated values of weighting control voltage, and the ideal weighting curve can be obtained for only one specific weighting curve, since linear interpolation by means of fixed resistors is employed. Fig. 5 is a circuit diagram of a drive circuit and a weighting circuit for an embodiment of an ultrasonic wave diagnostic apparatus according to the present invention, wherein interpolated weighting values can be obtained in such a way that a substantially precise correspondence with various different ideal weighting curves can be obtained. As for the embodiment described above, a set of three weighting control voltages is produced by interpolation by means of exerting an operation upon a pair of weighting control voltages produced from a pair of mutually adjacent D/A converters which are spaced apart by four channels, i.e. the D/A converters DA₁ and DA₂ shown in Fig. 5, which produce weighting control voltages for the first and the fifth channels, the D/A converters of the fifth and ninth channels, and so on. As for the embodiment described above, in this way a total of only 17 D/A converters, designated as DA₁ to DA₁₇, are required for the 64 channels A₁ to A₆₄ of the drive circuit 12. The manner in which each interpolated weighting voltage is produced by the interpolation circuit 13a' of the embodiment according to the present invention will be described for the case of the second channel. Here, the weighting voltage outputs from D/A converters DA₁ and DA2 are combined in a circuit consisting of a pair of analog multiplier elements (indicated as triangles) which multiply these weighting voltages by coefficients that are designated as L₂ and M₂ respectively, with the resultant voltages being summed up in an analog summing element SC₁. The respective magnitudes and polarities of the coefficients L₂ and M₂ are selected such that they produce an appropriate value of weighting voltage output from the summing element SC₁, which is applied to the channel A₂ of the drive circuit 12. Respective weighting voltages are produced for channels A₃, A₄, A₆, A₇,.... in a similar manner, from summing elements SC₃, SC₄, S₆, etc.

It can thus be understood that the embodiment of the present invention essentially differs from the first described embodiment in that the values of the interpolated weighting voltages produced by the interpolation circuit 13a' can be mutually independently determined by suitably selecting the values and polarities of the multiplying coefficients (L₂, M₂, L₃, M₃, etc.) in accordance with a desired weighting curve, rather than being fixedly determined by linear interpolation as in the case of the first described embodiment. The embodiment according to the present invention therefore enables a set of interpolated weighting voltages to be produced whose values conform closely to a desired arbitrary weighting curve.

In the embodiment of the present invention described above, the invention was only described as being applicable to the drive circuit 12. However, it would, on the other hand, be possible to use an interpolation circuit for producing weighting data to be supplied to the variable gain amplifier circuit 15. Alternatively, mutually independent interpolation circuits could be used both for the drive circuit 12, to act on the drive signals, and also for the variable gain amplifier circuit 15, to act on the received echo signals.

As described above, analog operations are performed on the analog weighting data produced as outputs from at least two D/A converters of a group of D/A converters which is smaller in number than the number of electro-acoustic transducer elements of an ultrasonic wave diagnostic apparatus, in order to obtain interpolated weighting data which is used for controlling the gain of respective channels of transmitting/receiving circuits, which differ from those channels controlled by weighting data produced from respective ones of the D/A converters. Thus, the number of components required can be substantially reduced while making it possible to perform accurate weighting for producing an ultrasonic wave beam whereby a cross-sectional image having a low degree of image distortion can be obtained.

## Claims

1. An ultrasonic wave diagnostic apparatus comprising an array of electro-acoustic transducer elements (**E1 to E64**) for transmitting ultrasonic waves to a body under examination and for converting ultrasonic echoes received from said body into electrical echo signals and transmitting/receiving circuits (**12, 15; A1 to A64**) each being connected to one of the transducer elements (**E1 to E64**) for driving said element by drive signals and for amplifying echo signals received therefrom, wherein said amplified echo signals are displayed as an echo image and wherein for side lobe suppression the gains of said transmitting/receiving circuits (**12, 15; A1 to A64**) are controlled by control voltages converted from digital weighting data by means of D/A-converters (**DA**),
**characterized in that**
selected transmitting/receiving circuits (**A1, A5, ...**) which are connected to transducer elements (**E1, E5, ...**) spaced by a predetermined number of transducer elements on said array are supplied with the appropriate gain control voltages by means of associated D/A-converters (**DA1 to DA17**),
whereas the remaining transmitting/receiving circuits (**A2 to A4, A6 to A8, ...**) which are connected to the other transducer elements (**E2 to E4, E6 to E8, ...**) are supplied with gain control voltages having interpolated values, said gain control voltages being generated by analogous processing of the output voltages from at least two adjacent D/A-converters (**DA1, DA2, ...**), wherein said analogous processing implies multiplying the output voltage from each of said D/A-converters (**DA1, DA2, ...**) with suitable coefficients (**L2, M2, L3, M3, ...**) by means of multiplying elements, and summing up the resultant output voltages from at least two of said multiplying elements by means of summing elements (**SC₁, SC₂, ...**), whereby said interpolated values for said gain control voltages can be determined independently from each other and interpolated nonlinearly.

2. An ultrasonic wave diagnostic apparatus according to claim 1, **characterized by** an interpolation circuit means (**13a'**) comprising said multiplying elements and said summing elements (**SC₁, SC₂, ...**) and a weighting circuit means (**13**) comprising said at least two adjacent D/A-converters (**DA1, DA2, ...**) wherein said interpolation circuit means (**13a'**) comprises a first interpolation circuit for applying weighting data to said drive signals and a second interpolation circuit for applying weighting data to said echo signals.

3. An ultrasonic wave diagnostic apparatus according to claim 1, **characterized in that** said weighting data produced by means of an interpolation circuit means (**13a'**) are applied to either said drive signals or said echo signals.

## Patentansprüche

1. Ultraschallwellendiagnosegerät mit einer Anordnung von elektro-akustischen Wandlerelementen **(E₁ bis E₆₄)**, die Ultraschallwellen zu einem zu untersuchenden Körper senden und von dem Körper empfangene Ultraschall-Echosignale in elektrische Echosignale umwandeln, und Sender/Empfänger-Schaltungen **(12, 15; A₁ bis A₆₄)**, von denen jede an eines der Wandlerelemente **(E₁ bis E₆₄)** angeschlossen ist, um das Element mittels Treibersignalen zu betreiben und von dort empfangene Echosignale zu verstärken, wobei die verstärkten Echosignale als ein Echobild dargestellt werden und die Verstärkungsgrade der Sender/Empfänger-Schaltungen **(12, 15; A₁ bis A₆₄)** zur Unterdrückung von Nebenkeulen durch aus digitalen Gewichtungsfaktoren mittels Digital/Analog-Wandlern **(DA)** umgewandelten Steuerspannungen gesteuert werden,
**dadurch gekennzeichnet, daß**
ausgewählten Sender/Empfänger-Schaltungen **(A₁, A₅, ...),** die an Wandlerelemente **(E₁, E₅, ...)** angeschlossen sind, die innerhalb der Anordnung um eine vorbestimmte Anzahl von Wandlerelementen voneinander entfernt sind, mittels zugehöriger Digital/Analog-Wandler **(DA₁ bis DA₁₇)** die geeigneten Verstärkungsgradsteuerungsspannungen zugeführt werden,
während den verbleibenden Sender/Empfänger-Schaltungen **(A₂ bis A₄, A₆ bis A₈, ...)**, die an die anderen Wandlerelemente **(E₂ bis E₄, E₆ bis E₈, ...)** angeschlossen sind, interpolierte Werte aufweisende Verstärkungsgradsteuerungsspannungen zugeführt werden, die durch analoge Verarbeitung der Ausgangsspannungen von mindestens zwei benachbarten Digital/Analog-Wandlern **(DA₁, DA₂, ...)** erzeugt werden, wobei die analoge Verarbeitung das Multiplizieren der Ausgangsspannung eines jeden Digital/Analog-Wandlers **(DA₁, DA₂, ...)** mit geeigneten Koeffizienten **(L₂, M₂, L₃, M₃, ...)** mittels Multipliziergliedern und das Summieren der sich ergebenden Ausgangsspannungen von mindestens zwei der Multiplizierglieder mittels Summiergliedern **(SC₁, SC₂, ...)** impliziert und die interpolierten Werte für die Verstärkungsgradsteuerungsspannungen unabhängig voneinander bestimmbar und nichtlinear interpolierbar sind.

2. Ultraschallwellendiagnosegerät nach Anspruch 1, **gekennzeichnet durch** eine Interpolationsschaltungsvorrichtung **(13a')**, die die Multiplizierglieder und die Summierglieder **(SC₁, SC₂, ...)** enthält, und eine Gewichtungsschaltungsvorrichtung **(13)**, die die mindestens zwei benachbarten Digital/Analog-Wandler **(DA₁, DA₂, ...)** enthält, wobei die Interpolationsschaltungsvorrichtung **(13a')** eine erste Interpolationsschaltung zum Anwenden von Gewichtungsfaktoren auf die Treibersignale und eine zweite Interpolationsschaltung zum Anwenden von Gewichtungsfaktoren auf die Echosignale enthält.

3. Ultraschallwellendiagnosegerät nach Anspruch 1, **dadurch gekennzeichnet, daß** die mittels einer Interpolationsschaltungsvorrichtung **(13a')** gewonnenen Gewichtungsfaktoren entweder auf die Treibersignale oder auf die Echosignale angewendet werden.

## Revendications

1. Appareil de diagnostic à ultrasons comprenant une série d'éléments transducteurs électro-acoustiques (E1 à E64) pour émettre des ultrasons vers un corps en cours d'examen et pour convertir les échos ultrasoniques reçus dudit corps en signaux d'échos électriques et des circuits émetteurs/récepteurs (12, 15 ; A1 à A64) dont chacun est connecté à un des éléments transducteurs (E1 à E64) pour activer ledit élément à l'aide de signaux d'activation et pour amplifier les signaux d'écho reçus de cet élément, appareil dans lequel lesdits signaux d'échos amplifiés sont visualisés sous forme d'une image d'écho et dans lequel, pour supprimer les lobes latéraux, les gains des circuits émetteurs/récepteurs (12, 15 ; A1 à A64) sont commandés à l'aide de tensions de commande obtenues par conversion à partir de données de pondération numériques au moyen de convertisseurs N/A (DA),
caractérisé en ce que :
les circuits émetteurs/récepteurs sélectionnés (A1, A5, ...) qui sont connectés aux éléments transducteurs (E1, E5, ...) espacés d'un nombre prédéterminé d'éléments transducteurs dans ledit réseau sont alimentés avec des tensions de commande de gains appropriées au moyen des convertisseurs N/A associés (DA1 à DA17),
tandis que les circuits émetteurs/récepteurs restants (A2 à A4, A6 à A8, ...) qui sont connectés aux autres éléments transducteurs (E2 à E4, E6 à E8, ...) sont alimentés avec des tensions de commande de gain ayant des valeurs interpolées, lesdites tensions de commande de gain étant générés par un traitement analogique des tensions de sortie d'au moins deux convertisseurs N/A adjacents (DA1, DA2, ...), ledit traitement analogique impliquant une multiplication de la tension de sortie de chacun des convertisseurs N/A (DA1, DA2, ...) par des coefficients appropriés (L2, M2, L3, M3, ...) au moyen d'éléments de multiplication et la sommation des tensions de sortie résultante d'au moins deux desdits éléments de multiplication au moyen d'éléments de sommation (SC₁, SC₂, ...), grâce à quoi les valeurs interpolées précitées relatives aux tensions de commande de gain peuvent être déterminées indépendamment les unes des autres et interpolées de façon non-linéaire.

2. Appareil de diagnostic à ultrasons selon la revendication 1, caractérisé par un agencement (13a') de circuit d'interpolation comprenant lesdits éléments de multiplication et lesdits éléments de sommation (SC₁, SC₂, ...) et un agencement (13) de circuit de pondération comprenant les deux convertisseurs N/A adjacents (DA1, DA2, ...) au nombre d'au moins deux, ledit agencement de circuit d'interpolation (13a') comprenant un premier circuit d'interpolation destiné à appliquer les données de pondération auxdits signaux d'activation et un second circuit d'interpolation destiné à appliquer des données de pondération auxdits signaux d'écho.

3. Appareil de diagnostic à ultrasons selon la revendication 1, caractérisé en ce que lesdites données de pondération produites à l'aide d'un moyen (13a') formant circuit d'interpolation sont appliqués soit auxdits signaux d'activation, soit auxdits signaux d'écho.
